(19) **Europäisches Patentamt**
**European Patent Office**
**Office européen des brevets**

(11) **EP 2 082 512 B1**

(12) **EUROPEAN PATENT SPECIFICATION**

(45) Date of publication and mention
of the grant of the patent:
**17.10.2012 Bulletin 2012/42**

(51) Int Cl.:
*H04L 1/00* (2006.01)     *H04L 1/06* (2006.01)
*H04L 1/20* (2006.01)

(21) Application number: **07835544.3**

(22) Date of filing: **13.11.2007**

(86) International application number:
**PCT/SG2007/000389**

(87) International publication number:
**WO 2008/060247 (22.05.2008 Gazette 2008/21)**

(54) **METHOD FOR SELECTING TRANSMISSION PARAMETERS FOR A DATA TRANSMISSION AND DATA TRANSMISSION CONTROLLER**

VERFAHREN ZUR AUSWAHL VON ÜBERTRAGUNGSPARAMETERN FÜR EINE DATENÜBERTRAGUNG UND DATENÜBERTRAGUNGSSTEUERUNG

PROCÉDÉ DE SÉLECTION DE PARAMÈTRES DE TRANSMISSION POUR UNE TRANSMISSION DE DONNÉES, ET CONTRÔLEUR DE TRANSMISSION DE DONNÉES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.11.2006 US 865536 P**

(43) Date of publication of application:
**29.07.2009 Bulletin 2009/31**

(73) Proprietor: **Agency for Science, Technology And Research**
**Singapore 138632 (SG)**

(72) Inventors:
• **TAN, Peng Hui**
**Singapore 138632 (SG)**

• **WU, Yan**
**Singapore 138632 (SG)**
• **SUN, Sumei**
**Singapore 138632 (SG)**

(74) Representative: **Viering, Jentschura & Partner**
**Grillparzerstrasse 14**
**81675 München (DE)**

(56) References cited:
**EP-A- 0 903 883**     **EP-A- 1 255 368**
**EP-A- 1 681 802**     **WO-A-2006/101620**
**GB-A- 2 373 135**     **GB-A- 2 385 754**
**US-A1- 2003 072 390**     **US-A1- 2004 240 531**
**US-A1- 2005 099 975**     **US-B1- 6 823 005**

**Description**

<u>Field of the invention</u>

The invention generally relates to a method for selecting transmission parameters for a data transmission and a data transmission controller.

<u>Background of the invention</u>

Adaptive modulation and coding (AMC) is an efficient tool to counteract fading and enhance the performance of wireless communication systems. The task of AMC is to select the best modulation and coding scheme (MCS) on the basis of channel state information (CSI) about the communication channel between a transmitter and a receiver so as to achieve higher data throughput of the communication system. Each MCS is associated with a coding rate and constellation size, which has a given bit rate. The packet error rate (PER) of the data transmission between the transmitter and the receiver can be used as a basis for a Quality of Service (QoS) constraint to select the best MCS for the current condition of the communication channel. The PER determines the number of retransmissions required which affects both throughput and delivery delay.

The document EP-A-1 681 802 describes a method and system for maximizing throughput in a multiple input multiple output communication system in which throughput calculations may be performed which indicate the quantity of error-free information per unit of time. Throughput may for example be given as a function of modulation and coding rate selection.

<u>Summary of the invention</u>

The invention is carried out in accordance with the appended claims.

<u>Short description of the figures</u>

Illustrative embodiments of the invention are explained below with reference to the drawings.

Figure 1    shows a communication system according to an embodiment of the invention.

Figure 2    shows a flow diagram according to an embodiment of the invention.

Figure 3    shows a data transmission controller according to an embodiment of the invention.

Figure 4    shows a demodulation/decoding system according to an embodiment of the invention.

Figure 5    shows function graphs.

Figure 6    shows a flow diagram according to an embodiment of the invention.

Figure 7    shows a flow diagram according to an embodiment of the invention.

Figure 8    shows a flow diagram according to an embodiment of the invention.

Figure 9    shows a flow diagram according to an embodiment of the invention.

Figure 10    shows a data flow diagram illustrating the MCS selection according to an embodiment of the invention.

<u>Detailed description</u>

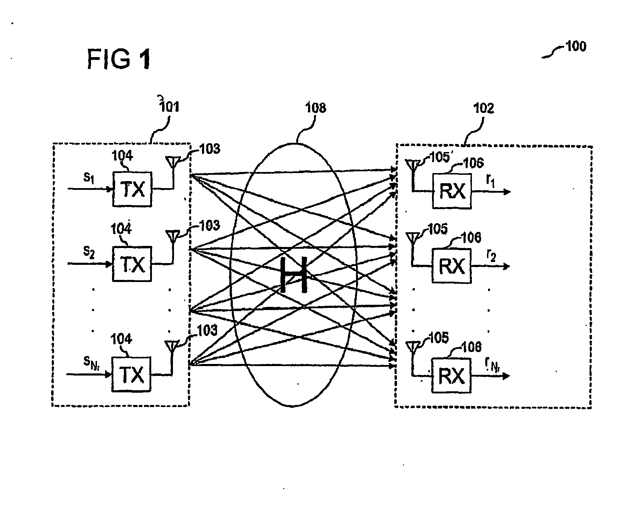

Figure 1 shows a communication system 100 according to an embodiment of the invention.
The communication system 100 includes a transmitter 101 and a receiver 102. The transmitter 101 includes a plurality of transmit antennas 103, each transmit antenna 103 being coupled with a respective sending circuit 104.
Each sending circuit 104 is supplied with a component of a $N_t \times 1$ signal vector $\underline{s} = [s_1, s_2, ... , s_{N_t}]^T$ where $N_t$ is the number of transmit antennas 103. Each sending circuit 104 transmits the respective component of the signal <u>vector s</u> using the respective antenna 103, such that altogether, the signal vector $\underline{s}$ is.sent. The transmitted signal vector is received by the transmitter 102 by a plurality of receive antennas 105, each receive antenna 105 being coupled with a respective receiving circuit 106, in form of the received $N_r$ x 1 signal vector r = [$r_1$, $r_2$, ..., $r_{N_r}$]$^T$ via a communication channel 108. $N_r$ denotes the number of receive antennas 105. Since $N_r$ and Nt are assumed to be bigger than one, the communication system 100 is a MIMO (multiple-input multiple-output) system, for example with $N_t$ = $N_r$ = 4 or 8.

Each receive antenna 105 receives one component of the received signal vector r and the respective component is output by the receiving circuit 106.

For example, the communication system 100 is a communication system according to Wifi IEEE 802.11n, WiMax IEEE 802.16, or 3GPP LTE (Third Generation Partnership Project Long Term Evolution).

In one example, the communication system 100 is a MIMO system associated with orthogonal frequency division multiplexing (OFDM). Various transmission modes can be considered for a given multiple antenna setting. These transmission modes include the space-time coding (STC), spatial division multiplexing (SDM), and hybrid SDM-STC modes.

The various transmission modes can be classified as open loop or closed loop. It is known as an open loop transmission mode when the channel state information about the communication channel 108 is known only to the receiver 102. When certain channel knowledge is known at the transmitter 101, the transmission mode is a closed loop transmission mode. When the transmitter 101 operates in closed-loop mode there is the possibility of performing a singular value decomposition (SVD) of the channel matrix to diagonalize the channel for each OFDM subcarrier as will be explained in more detail below.

In the examples described in the following, it is assumed that the communication system 100 uses SDM transmission mode designed for open loop and closed loop operation. However, in other examples, other modes (STC and hybrid SDM-STC) may be used. Uneven MCS, i.e., different modulation schemes for different spatial streams, and other error correction coding, e.g., low density parity check(LDPC) codes, Turbo codes, etc., can also be included into the system model.

The setting of a MCS (modulation and coding scheme) is for example the setting of a constellation, a coding rate and a transmission mode.

In one embodiment, the receiver 102 runs an adaptive modulation and coding algorithm which determines the best MCS available for the multiple antenna setting. The adaptive modulation and coding algorithm for example tries to maximize the bit rate of the data transmission between the transmitter 101 and the receiver 102 under a PER constraint, e.g. a maximum allowed PER.

The PER is a function of the MCS, the CSI and the packet length, i.e. the number of bits included in a data packet. The number of parameters in this function is usually very high. To reduce the complexity of the PER prediction, these parameters may be mapped onto a Link Quality Metric (LQM), which can then be mapped directly to PER by a look-up table. For each MCS, it is possible to define a range of LQM values over which the MCS maximizes the data throughput of the communication system 100.

The most common LQM used is the instantaneous signal-to-noise ratio (SNR). It is defined as the ratio of the average of the squared modulus of the received signal to the noise power. However, the PER of a given MCS may vary significantly for different channel realizations with the same instantaneous SNR. There may exist some bad channels in which the AMC selects a MCS which has a PER that is much higher than the target PER. This leads to a broken link for the duration dependent on the channel coherence time. A solution to this problem is to shift the SNR thresholds with a safety margin for a more robust MCS selection. However, this results in a reduction in throughput of the system.

In order to reduce this safety margin, the PER-indicator and the exponential effective SNR mapping (Exp-ESM) method may be used to predict the PER performance. In both cases, a scalar is computed based on the knowledge of CSI. The PER-indicator method is based on the observation that the PER curves of all the channel realizations are nearly parallel. An indicator is computed which is mapped to the corresponding distance (in dB) from the PER performance in an additive white Gaussian noise (AWGN) channel. This mapping is done by curve fitting for each combination of the code rate, the modulation and the information block size. For the (Exp-ESM) method, it consists of deriving a scalar LQM called exponential effective SNR. This is the SNR that would be required on an AWGN channel to obtain the same PER as the communication system 100. The way to obtain this effective SNR is to fit the model over a large-enough number of independent channel realizations according to certain criteria. In general, it is difficult to characterize the PER performance by a scalar parameter.

Multiple parameters may be used to predict the PER performance. For example, a method based on using the post-detection SNRs may be used to predict PER performance in MIMO-OFDM systems where each stream is encoded separately.

The effective SNR for each stream is then mapped into the corresponding PER which is used in predicting the overall PER.

Recently, there has been a lot of emphasis on joint detection and decoding of coded wireless systems by the iterative decoding which is based on the Turbo principle. It is an efficient and powerful method for decoding wireless systems since it approaches the limit of the optimum decoder. It has been applied to the wireless systems with intersymbol interference, multiple antennas, multicarrier and multiple users. Such systems are essentially serial concatenation schemes. For any particular channel realization, it is possible to characterize the BER (bit error rate) performance of the iterative decoding using extrinsic information transfer (EXIT) functions.

AMC may also be implemented in MIMO systems using iterative receivers with perfect CSI, wherein the approximation of the BER performance of the receivers is based on an EXIT analysis. If the error probability of each bit is conditionally independent from errors in other bits, the PER can be determined by

$$\text{PER} = 1 - (1 - \text{BER})^B \qquad\qquad (1)$$

where B is the number of bits in the packet. However, for coded systems, the BER is usually correlated, i.e. the probability of an error in a bit is not independent from errors in other bits. Therefore, (1) is only a coarse approximation of the PER.

In the following, a quasi-static block fading model for the MIMO-OFDM communication system 100 is assumed. It is further assumed that there are $N_f$ sub-carriers in each OFDM symbol and Np OFDM symbols per packet. The fading channels are assumed to remain static during each packet transmission. The quasi-static assumption of the channel is not essential. The examples described in the following can also be used with regular update CSI.

According to OFDM, the sending circuits 104 perform an inverse fast Fourier transform (IFFT) on the signal vector $\underline{s}$. Further, a cyclic prefix is inserted (cyclic insertion) by the sending circuits 104 before sending the IFFT-transformed signal vector s via the transmit antennas 103. The signal vector $\underline{s}$ is for example generated from an input data stream which is processed by encoding, interleaving and modulation and then demultiplexed to the sending circuits 104. Optionally, a transmit spatial processing may be carried out after demultiplexing.

Accordingly, the receiving circuits 106 remove the cyclic prefix, and perform an FFT. In the case that there is a transmit spatial processing the receiver 102 carriers out the corresponding inverse operation on the output of the receiving circuits 106, i.e. a receive spatial processing, on the received signal vector $\underline{r}$. The received signal vector $\underline{r}$ (or the result of the receive spatial processing if there is one) is multiplexed, demodulated, deinterleaved, and decoded such that a reconstructed data stream corresponding to the input data stream is generated.

The frequency domain channel response matrix at the k-th (k = 0, ... , $N_f$ - 1) subcarrier and the p-th (p = 0, ... , $N_p$ - 1) OFDM slot is given by

$$\underline{H}[k, p] = \sum_{l=0}^{L-1} \underline{R}_l^{1/2} \underline{H}_l \underline{S}_l^{1/2} \exp(-j2\pi lk / N_f) \qquad\qquad (2)$$

where $\underline{R}_l = \underline{R}_l^{1/2} \underline{R}_l^{1/2}$ and $\underline{S}_l = \underline{S}_l^{1/2} \underline{S}_l^{1/2}$ represent the receive and transmit spatial correlation matrices, which are determined by the spacing and the angle spread of the MIMO antennas 103, 105. L is the number of resolvable paths of the frequency selective fading channels between the transmit antennas 103 and the receive antennas 105. $\underline{H}_l$ are matrices with elements being independent and identically circularly symmetric complex Gaussian distributed according to $N_C(0, \alpha_l^2)$ and are assumed to be independent for different values of 1. The power of $H_l$ is assumed to be normalized by $\sum_{l=0}^{L-1} \alpha_l^2 = 1$. In this model, it is assumed that there are uniform linear arrays at both the transmitter 101 and the receiver 102. Let the relative antenna spacing between the antennas 103, 105 (measured in number of wavelengths) be $d_r$ for the receive antennas 105 and dt for the transmit antennas 103. In addition, let the mean angle of arrival (AoA), mean angle of departure (AoD), receive angle spread and transmit angle spread be denoted as $\theta_r$, $\theta_t$, $\sigma_r^2$, and $\sigma_t^2$, respectively. The actual AoA and AoD are denoted by $\underline{\theta_r} = \theta_r + \hat{\theta_r}$ and

$\theta_t = \theta t + \hat{\theta}_t$, with $\hat{\theta}_r \sim N(0, \sigma_r^2)$ and $\hat{\theta}_t \sim N(0, \sigma_t^2)$.

With these definitions, the (i,j)-th elements of $\underline{R}$ and S are given by

$$R_{i,j} = \exp[-j2\pi(j - i)d_r \cos(\theta_r) - (2\pi(j - i)d_r \sin(\theta_r)\sigma_r)^2 / 2],$$
$$S_{i,j} = \exp[-j2\pi(i - j)d_t \cos(\theta_t) - (2\pi(i - j)d_t \sin(\theta_t)\sigma_t)^2 / 2]. \tag{3}$$

When it is assumed that there is proper cyclic insertion and sampling, the MIMO-OFDM communication system 100 decouples the frequency selective channels into $N_f$ correlated flat fading channels according to

$$\underline{r}_k[p] = \underline{H}_k\underline{A}_k\underline{s}_k[p] + \underline{n}_k[p]$$
$$\text{for } k = 0, \ldots, N_f - 1, p = 0, \ldots, N_p - 1, \tag{4}$$

where $\underline{r}_k[p] \in \mathbb{C}^{N_r}$ is the received signal vector (indexed by the sub-carrier number k), $\underline{H}_k \in \mathbb{C}^{N_r \times N_t}$ is the matrix of complex channel frequency responses defined in (2), $\underline{s}_k[p] \in \mathbb{C}^{N_m}$ is the transmitted modulation symbol vector with elements chosen from the complex scalar constellation S with unit average power, $A_k$ specifies the transmit spatial processing (if there is one), and $\underline{n}_k[p] \in \mathbb{C}^{N_r}$ is the additive noise with i.i.d. (independently identically distributed) elements according to $N_c(0, N_0I)$.

The output of the receive spatial processing (if there is one) can be written as

$$\underline{y}_k[p] = \underline{B}_k\underline{r}_k[p], \tag{5}$$

where $B_k$ is a transformation representing the receive spatial processing.

In the following, for simplicity of notation, the indices k and p are omitted for the channel matrix H, the received signal vector $\underline{r}$, etc.

If there was full knowledge of the channel state information at the transmitter 101, the communication channel 108 (associated with a certain subcarrier) could be decomposed into orthogonal spatial channels by means of a singular value decomposition. However, in practice, the knowledge of the channel state information at the transmitter 101 is never perfect. Thus,

$$\underline{H} = \hat{\underline{H}} + \underline{\Xi}, \tag{6}$$

where $\hat{\underline{H}}$ is the estimated channel matrix obtained by zero-forcing or according to MMSE channel estimation and $\underline{\Xi}$ is the estimation error matrix. $\hat{\underline{H}}$ and $\underline{\Xi}$ are uncorrelated due to the property of zero-forcing or MMSE channel estimation. Each element of $\underline{\Xi}$ is i.i.d. with $N_c(0, \sigma_e^2)$, where the variance is given by $\sigma_e^2 = E[|H_{i,j} - \hat{H}_{i,j}|^2]$. The estimated channel matrix for each subcarrier can be diagonalized by singular value decomposition as

$$\underline{\hat{H}} = \underline{\hat{U}}\underline{\hat{D}}\underline{\hat{V}}^H \qquad\qquad (7)$$

where $\underline{\hat{U}} \in \mathbb{C}^{N_r \times N_r}$ and $\underline{\hat{V}} \in \mathbb{C}^{N_t \times N_t}$ are unitary matrices, and $\underline{\hat{D}} \in \mathbb{C}^{N_r \times N_t}$ is a diagonal matrix whose elements are the ordered singular values of the estimated channel matrix $\hat{H}$. The rank $N_m$ of $\hat{H}$ is at most min($N_r$, $N_t$) and hence at most min($N_r$, $N_t$) of its singular values are nonzero. These values are denoted by $\sqrt{\hat{\lambda}_i}$ for i = 1, ... , $N_m$. Note that the $\hat{\lambda}_i$ are the ordered eigenvalues of the complex Wishart matrix $\hat{W}$ given by

$$\underline{\hat{W}} = \begin{cases} \underline{\hat{H}}\underline{\hat{H}}^H & \text{if } N_r \leq N_t \\ \underline{\hat{H}}^H\underline{\hat{H}} & \text{if } N_t \leq N_t \end{cases} . \qquad\qquad (8)$$

In the example that the communication system 100 is based on singular value decomposition, the symbol vector (transmit signal vector) s is transformed by multiplying it with the matrix $\underline{\hat{V}}$:

$$\underline{x} = \underline{\hat{V}}\underline{s} \qquad\qquad (9)$$

i.e. the vector s fed to the sending circuits 104 is replaced by the vector x. The resulting received signal vector r is given by

$$\underline{r} = \underline{\hat{U}}\underline{\hat{D}}\underline{s} + \underline{\Xi}\underline{\hat{V}}\underline{s} + \underline{n} \qquad\qquad (10)$$

The receive spatial processing consists of multiplying $\underline{r}$ with $\hat{U}^H$, which results in the form

$$\underline{y} = (\underline{\hat{D}} + \underline{\hat{\Xi}})\underline{s} + \underline{z} \qquad\qquad (11)$$

Due to the orthonormality of $\hat{U}^H$, the noise vector z remains Gaussian with mean 0 and variance $N_0I$. The components of $\underline{y}$ are given by

$$y_i = \left(\sqrt{\hat{\lambda}_i} + \hat{\Xi}_{i,i}\right)s_i + \sum_{j \neq i} \hat{\Xi}_{j,i}s_j + z_i, \quad \text{for } i = 1, \ldots, N_m \qquad (12)$$

For perfect knowledge of CSI, (12) shows that the transmission can be seen as taking place on a set of $N_m$ parallel equivalent (virtual) channels. However, when there is imperfect knowledge of CSI, these channels are no longer independent due to the fact that $\underline{\hat{D}} + \underline{\hat{\Xi}}$ is not diagonal. In other words, there exists not only AWGN, but also cochannel interference (CCI) from other channels.

It is assumed that the CCI term $\sum_{j \neq i} \hat{\Xi}_{j,i}s_j$ is Gaussian distributed. The signal-to-noise ratio (SNR) $\gamma_i$ for the i-th channel (i = 1, ... , $N_m$) is defined as

$$\gamma_i = 10 \log \frac{\hat{\lambda}_i}{N_0 + N_m \sigma_e^2} \qquad (13)$$

In one example, the receiver 102 uses iterative decoding for decoding the received signal vector processed by receive spatial processing y. Iterative decoding for coded MIMO-OFDM systems is based on exchanging extrinsic soft information between the MIMO receiver (demodulator) at each subcarrier and the soft-input soft-output (SISO) decoder. For each subcarrier, there are $mN_m$ transmitted coded bits associated with the vector y in (11), where $m = \log_2(M)$ denotes the bits per M-ary QAM modulation symbol (assuming that QAM is used for modulation). The receiver (demodulator) generates extrinsic log-ratio on each coded bit which is given by

$$\tilde{\Lambda}_{i,j} = \log \frac{\sum_{s_i : c_{i,j}=1} p(y_i \mid s_i) \prod_{l \neq j} p^a(c_{i,l})}{\sum_{s_i : c_{i,j}=0} p(y_i \mid s_i) \prod_{l \neq j} p^a(c_{i,l})} \qquad (14)$$

where $p^a(c_{i,1})$ is the a priori probability of the coded bit $c_{i,1}$ obtained from the output of the SISO decoder. This extrinsic information is then passed on to the SISO decoder as a priori input information. The SISO decoder for example uses the BCJR algorithm, and outputs extrinsic information for the coded bits, which is then forwarded to the MIMO receiver (demodulator). This completes an iteration stage of the iterative decoding.

Without singular value decomposition, the maximum a posteriori (MAP) receiver for the received signal vector r at each subcarrier is given by

$$\tilde{\Lambda}_{i,j} = \log \frac{\sum_{s_i : c_{i,j}=1} p(\underline{r} \mid \underline{s}) \prod_{l \neq j} p^a(c_{i,l})}{\sum_{s_i : c_{i,j}=0} p(\underline{r} \mid \underline{s}) \prod_{l \neq j} p^a(c_{i,l})} \qquad (15)$$

The exponential computational complexity of (15) has led to research on suboptimal, low complexity SISO receivers based on soft interference cancellation. These receivers are based on the combination of a linear filter and an interference canceller. For each transmit antenna i, the soft estimates for si may be computed by

$$\hat{s}_i = \sum_{s_i \in S} s_i p^a(s_i), \qquad (16)$$

where $p^a(s_i)$ is the a priori probability which is fed back by the decoder. After cancellation is performed, the soft output is given by

$$\hat{\underline{r}}_i = \underline{\hat{H}}(\underline{s} - \underline{\hat{s}}_i) + \Xi\underline{s} + \underline{n}, \qquad (17)$$

where $\underline{\hat{s}}_i = [\hat{s}_1, ..., \hat{s}_{i-1}, 0, \hat{s}_{i+1}, ..., \hat{s}_{N_m}]^T$ are the soft estimates computed according to (16). Next, in order to further suppress the residue interference in $\hat{r}_i$, an instantaneous linear filter may be applied to $\hat{r}_i$.

A popular choice of such a linear filter is the MMSE filter. However, the following analysis and the examples of the invention described in the following are also applicable to the maximum ratio combining (or the matched filter) receiver where $w_i = \hat{H}e_i$.

The MMSE filter is designed such that it minimizes the mean square error $E[\,|\,w_i^H r_i - s_i\,|^2\,]$. As a result, the filter vector $w_i$ is obtained as

$$\underline{w}_i = \left(\underline{\hat{H}}\underline{V}_i\underline{\hat{H}}^H + N_0\underline{I}\right)^{-1}\underline{\hat{H}}e_i, \tag{18}$$

where $\underline{V}_i = \mathrm{Diag}(\sigma_1^2, \ldots, \sigma_{i-1}^2, 1, \sigma_{i+1}^2, \ldots, \sigma_{N_t}^2)$ and $e_i$ is a $N_t$-dimensional vector of all zeros except for the i-th element which is 1. The variance $\sigma_i^2$ is given by

$$\sigma_i^2 = \sum_{s_i \in S} |\,s_i\,|^2\, p^a(s_i) - |\,\hat{s}_i\,|^2 \tag{19}$$

The output of the i-th filter is then approximated by an equivalent AWGN channel having si as its input symbol. This equivalent channel is represented as

$$\tilde{r}_i = a_i s_i + b_i, \tag{20}$$

where $a_i$ is the equivalent amplitude of the signal and the noise term bi is a Gaussian random variable with zero mean and variance $\sigma_{b_i}^2$. The parameters $a_i$ and $\sigma_{b_i}^2$ are computed by

$$a_i = \underline{w}_i^H \underline{\hat{H}}e_i, \tag{21}$$

and

$$\sigma_{b_i}^2 = a_i + \sigma_e^2 \underline{w}_i^H \underline{w}_i. \tag{22}$$

The SNR $\gamma_i$ for the channel is

$$\gamma_i = 10\log\frac{a_i^2}{a_i + \sigma_e^2 \underline{w}_i^H \underline{w}_i - a_i^2} \tag{23}$$

Extrinsic information is given as

$$\tilde{\Lambda}_{i,j} = \log\frac{\displaystyle\sum_{s_i:c_{i,j}=1}\exp\left(-\mid \tilde{r}_i - s_i\mid^2 / \sigma_{b_i}^2\right)\prod_{l\neq j}p^a(c_{i,l})}{\displaystyle\sum_{s_i:c_{i,j}=0}\exp\left(-\mid \tilde{r}_i - s_i\mid^2 / \sigma_{b_i}^2\right)\prod_{l\neq j}p^a(c_{i,l})}. \tag{24}$$

In one embodiment of the invention, an adaptive modulation and coding algorithm is carried out. This algorithm is based on a packet error rate prediction wherein the channel estimation error may or may not be taken into account.

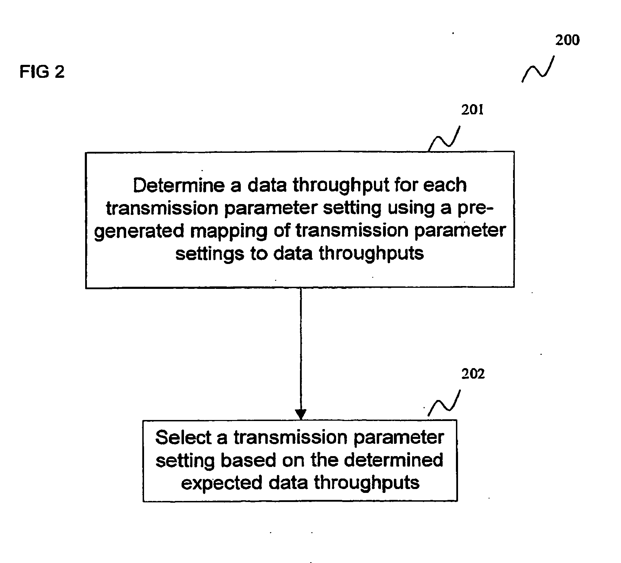

A method for selecting transmission parameters for a data transmission according to an embodiment of the invention is illustrated in figure 2.

Figure 2 shows a flow diagram 200 according to an embodiment of the invention.

In 201, a data throughput is determined, for each of a plurality of transmission parameter settings, that is expected when the transmission parameter setting is used for data transmission, wherein the data throughput is determined using a pre-generated mapping of transmission parameter settings to data throughputs.

In 202, a transmission parameter setting is selected based on the determined expected data throughputs.

The transmission parameter setting is for example selected such that the expected throughput is maximized. In one embodiment, the data throughput is determined from an error rate that is expected when the transmission parameter setting is used for data transmission.

The error rate is for example determined using a pre-generated mapping of transmission parameter settings to error rates.

The transmission parameter setting may be selected subject to a target error rate constraint of the data transmission. The target error rate constraint is for example obtained from a Quality of Service constraint of the data transmission.

The target error rate constraint is for example a limit of the probability that the actual error rate exceeds a prespecified target error rate.

In one embodiment, the pre-generated mapping of transmission parameter settings to error rates is implemented by using a look up table pre-generated from the simulation results.

A data transmission is for example carried out using the selected transmission parameter setting.

The transmission parameter setting for example defines at least one of a data transmission mode, a coding rate, a constellation size, a modulation type, and a coding type.

In one embodiment, the expected error rate for a transmission parameter setting is an expected packet error rate for the transmission parameter setting.

The pre-generated mapping of transmission parameter settings to error rates is for example pre-generated based on an analysis of extrinsic information transfer in a receiver receiving data according to the respective transmission parameter settings.

For example, the pre-generated mapping of transmission parameter settings to error rates is pre-generated by simulation. The pre-generated mapping of transmission parameter settings to error rates is for example pre-generated from the simulation results by curve-fitting, e.g. by fitting a polynomial function to the simulation results.

Different curve fitting functions may be used for different transmission parameter settings. In one embodiment, different curve fitting functions are used for different signal-to-noise ratio regions for the same transmission parameter setting.

In one embodiment, the transmission parameter setting is selected by a first communication device and a specification of the selected transmission parameter setting is signaled by the first communication device to a second communication device to be used for a data transmission from the second communication device to the first communication device.

The data transmission is for example a data transmission in a radio communication system, e.g. a multiple-input multiple-output communication (MIMO) system, a multicarrier (e.g. OFDM) system, a multiple user system (e.g. OFDMA or CDMA) or any wireless communication system with intersymbol interference (ISI).

In one embodiment, the transmission parameter setting specifies a number of spatial streams to be selected for the data transmission and the transmission parameter setting is selected based on a previously selected transmission parameter setting and a pre-determined switching table associated with the previously selected transmission parameter setting, wherein the switching table includes information about characteristics of the data transmission when a different number of spatial streams is used than according to the previously selected transmission parameter setting.

For example, the characteristics of the data transmission is the robustness of the data transmission or the expected throughput of the data transmission.

The transmission parameter setting is for example selected from a set of candidate transmission parameter settings generated based on a look-up table which is generated based on at least one of a transmission parameter setting used for the transmission of a received data packet, the signal-to-noise ratio of a communication channel via which a data packet has been received, the number of transmit antennas and receive antennas used for the data transmission, and the capability of the transmitter and the receiver involved in the data transmission.

In one embodiment, the pre-determined mapping function uses a post-detection signal-to-noise ratio as input. For example, a plurality of spatial streams are used for the data transmission and the determination of the post-detection signal-to-noise ratio comprises at least one of grouping, sorting or averaging the signal-to-noise ratios of the spatial streams.

In another embodiment, a plurality of transmit antennas and a plurality of receive antennas are used for the data transmission and, if the number of transmit antennas is different from the number of receive antennas, a signal-to-noise ratio offset is used for determining the post-detection signal-to-noise ratio.

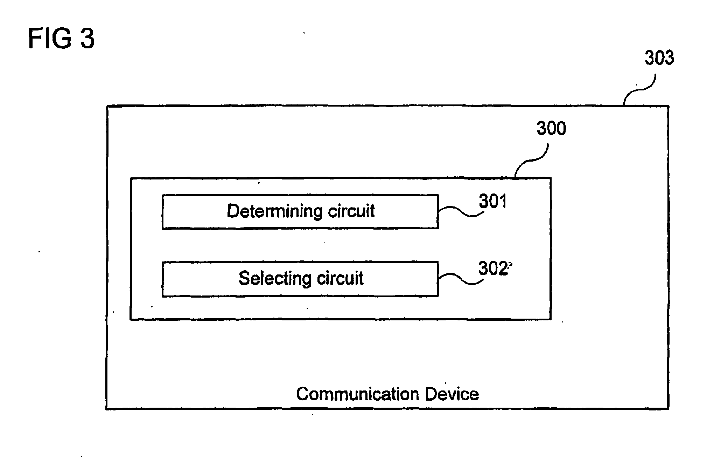

The method described with reference to figure 2 is for example carried out by a data transmission controller as illustrated in figure 3.

Figure 3 shows a data transmission controller 300 according to an embodiment of the invention.

The data transmission controller 300 includes a determining circuit 301 configured to determine, for each of a plurality of transmission parameter settings, a data throughput (e.g. based on an expected error rate) that is expected when the transmission parameter setting is used for a data transmission, wherein the data throughput is determined using a pre-generated mapping of transmission parameter settings to data throughputs.

The data transmission controller 300 further includes a selecting circuit configured to select a transmission parameter setting based on the determined expected data throughputs.

A circuit can be a hardware circuit, e.g. an integrated circuit, designed for the respective functionality or also a programmable unit, such as a processor, programmed for the respective functionality. A processor may for example be a RISC (reduced instruction set computer) processor or a CISC (complex instruction set computer).

The data transmission controller 300 is for example part of a communication device 303, for example a communication device of a radio communication system, e.g. a MIMO OFDM communication system.

The data transmission controller 300 (or the communication device 303) may further include a transmitter transmitting data according to the selected transmission parameter setting or signaling the selected transmission parameter setting to another communication device as transmission parameter setting to be used for a data transmission by the other communication device.

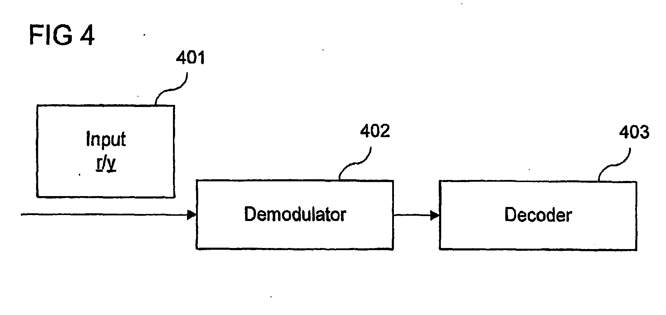

In the following, an embodiment is described where for determining the expected data throughputs, expected error rates are determined, which are in this example expected packet error rates (PERs). For this, the processing of the received signal vector $\underline{r}$ is described in more detail with reference to figure 4.

Figure 4 shows a demodulation/decoding system 400 according to an example of the invention.

The demodulation/decoding system 400 is for example part of the receiver 102. It receives as input 401 the received signal vector $\underline{r}$ from the receiving circuits 106, or, if there is receive spatial processing, the spatial processed received signal vector y.

The demodulation/decoding system 400 includes a demodulator 402 and a decoder 403. The input 401 is fed to the demodulator 402 and the output of the demodulator 402 is fed to the decoder 403. Note that there may be a de-interleaver processing the output of the demodulator 402 before it is fed to the decoder 403. This is omitted for simplicity.

The demodulator 402 is for example a MIMO demodulator and the decoder 403 is for example a SISO decoder.

The demodulation/decoding system 400 may perform an iterative processing of the input 401.

A convenient graphical description of the convergence behavior of an iterative decoding algorithm is given by extrinsic information transfer (EXIT) charts. The demodulator 402 and the decoder 403 may each be characterized by a nonlinear EXIT function of mutual information for a coded bit.

For both SVD and MMSE based MIMO-OFDM systems, the output of the receiving circuits 106, explained above, can be modeled as multiple virtual AWGN channels with SNR given by (13) and (23), respectively. Given the distribution of the extrinsic information of the decoder 403, the EXIT function of these virtual channels is described by

$$d_e = f(d_a, \gamma) \qquad (25)$$

where $d_e$ is the extrinsic mutual information of the demodulator 402, $d_a$ is the a priori mutual information which may be from the decoder 403, and $\gamma$ is the SNR of the respective virtual channel.

The EXIT function f is for example obtained by Monte-Carlo simulation.

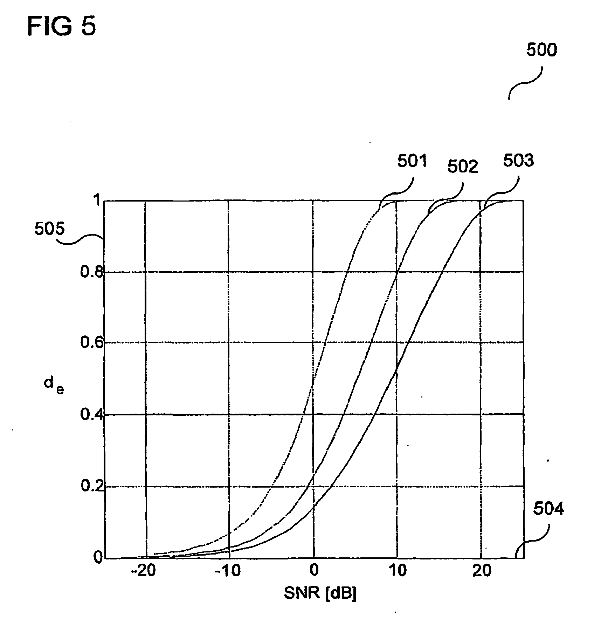

Examples for EXIT functions for different modulations are shown in figure 5.

Figure 5 shows function graphs 501, 502, 503.

The function graphs 501, 502, 503 are shown in a coordinate system 500 including an x-axis 504 and a y-axis 505. The x-axis coordinate corresponds to the SNR and the y-axis coordinate corresponds to $d_e$. The first function graph 501 gives a mapping from SNR to $d_e$ for an AWGN channel (i.e. a channel with additive white Gaussian noise) for which QPSK and Gray mapping are used, the second function graph 502 gives a mapping from SNR to $d_e$ for an AWGN channel for which 16 QAM and Gray mapping are used and the third function graph 503 gives a mapping from SNR to $d_e$ for an AWGN channel for which 64 QAM and Gray mapping are used $d_a$ is assumed to be zero.

Together, the function graphs 501, 502, 503 can be seen as a mapping from type of modulation and SNR to $d_e$.

The EXIT function of the decoder 403 is given by

$$c_e = g(\underline{c_a}) \qquad (26)$$

where $c_a$ is the a priori mutual information from the demodulator 402.

The information from the demodulator $c_a$ is a vector because the output of the demodulator corresponds to the multiple virtual AWGN channels whose EXIT functions are given in (25).

Hence, the distribution of the a priori log-likelihood ratios is a Gaussian mixture

$$p(\Lambda \mid c) = \sum_{i=1}^{N_f N_m} N(c\mu_i, 2\mu_i) / N_f / N_m \qquad (27)$$

where $c = \pm 1$ denotes the bit value, $\mu_i = J^{-1}(c_{ai})/2$ and $J(2\mu)$ is defined by

$$J(2\mu) = 1 - \int \exp[-(z - \mu)^2 / 4 / \mu] \log_2[1 + \exp(-z)] \, dz \qquad (28)$$

Therefore, the mutual information is a consistent Gaussian random variable $\Lambda \mid x \sim N(x\mu, 2\mu)$ where x is an equiprobable binary random variable $x \in \{\pm 1\}$.

Furthermore, the performance of the iterative decoding may be evaluated by relating it to $c_a$. For example, the coding is done by convolutional codes. The packet error rate (PER) may then be approximated by

$$PER = 1 - (1 - CBER)^{B / \upsilon} \qquad (29)$$

where B is the length of a data packet and CBER is the coded bit error rate (BER). In this example, only the error event with length $\upsilon$ is considered. The CBER function is related to $\underline{c_a}$ by

$$CBER = f_{CBER}(\underline{c}_a) \tag{30}$$

The function $f_{CBER}(\underline{c}_a)$ is obtained by simulation followed by curve fitting. To be able to describe the function approximately with reasonable complexity, the dimension of $\underline{c}_a$ or the SNR is reduced. Reduction in dimensions (in other words, resolution or accuracy) is for example done by using a uniform quantization of four levels. This method is more accurate than just taking the mean of $\underline{c}_a$.

According to one embodiment, a mapping of transmission parameters to packet error rate is pre-generated. For example, the mapping of the type of the modulation to $d_e$ as illustrated in figure 5 (in this example also having the SNR $\gamma$ as input) is pre-generated and using $d_e$, the expected error rate for this type of modulation is determined.

For this, for example, the function $f_{CBER}$ is pre-generated, as mentioned for example by simulation and curve-fitting, and may then be used to determine the CBER for a certain transmission parameter setting. From the CBER the expected packet error rate may then be calculated using (29).

As an example, the case is considered that the communication system 100 is a MIMO-OFDM system with a rate 1/2 convolutional code with 16QAM. The interleavers are randomly chosen. The packet length is either 4090 or 8186 bits. There are $N_f$ = 64 subcarriers and the channels have L = 6 resolvable multipaths. For the correlation matrices S and $\underline{R}$, it is assumed that $d_r = d_t$ = 1/2, $\theta_r = \theta_t = \pi/2$ and $2\sigma_t^2 = \sigma_r^2 = \pi/16$ for all paths.

Two channel realizations are considered which are fixed throughout the packet transmission. Simulations of these realizations with SVD, in which the average PER performance is determined, show that the simulated PER performance follows closely the performance predicted by the EXIT analysis (GM-4). When the channel estimation error is included, there is an error margin of around 0.4 dB. This error margin is caused mainly by the Gaussian approximation of the CCI in (12). Similar observations can be made when MMSE receivers are used.

As another example, the case is considered that each packet transmission encounters a channel realization which is chosen randomly and independently. The PER performance gained from simulations again follows closely the performance predicted in the above embodiment using EXIT analysis when perfect CSI is assumed. When the channel estimation error is considered, an error margin of around 0.35dB can be observed. Moreover, the above observations also hold for the MMSE receivers.

Finally, the case of SVD-based MIMO-OFDM systems with uneven modulation is considered. The stronger streams are modulated by 64QAM and the weaker ones by 16QAM. Perfect channel estimation is assumed. From simulations where the PER performance for different packet length and number of antennas is measured it can be seen that the simulated PER performance follows closely the performance predicted by the EXIT analysis according to the embodiment described above.

An example for the selection of transmission parameters according to an embodiment of the invention is described in the following.

For example, the setting of transmission parameters is carried out by the receiver 102 and the transmission parameters relate to the usage of the communication channel 108, for example the type of modulation used, the type of code or the code rate, constellation size, or transmission mode.

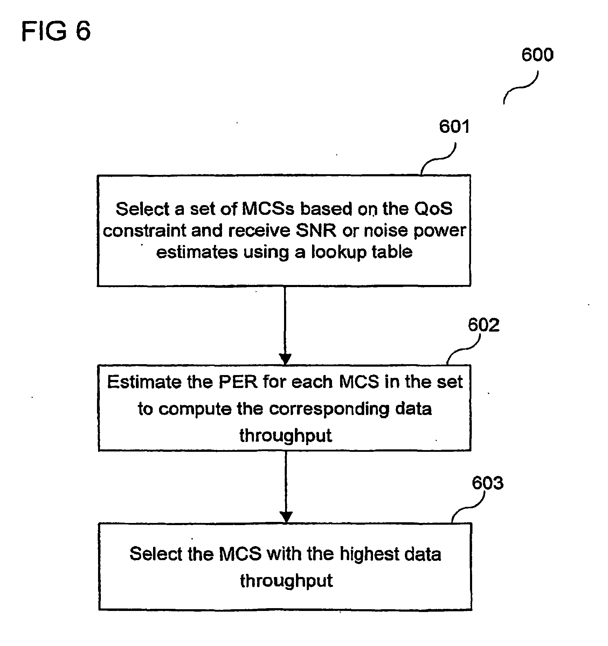

The method for setting the transmission parameters in this embodiment is a link adaptation algorithm that uses an AMC (adaptive modulation and coding) algorithm whose objective is to maximize the throughput (data rate) of the communication channel 108 under the condition that the PER is below a certain threshold and that the data rate is greater than a certain limit. A flow for determining the appropriate transmission parameter setting (also denoted as MCS for modulation and coding scheme) is described in the following with reference to figure 6.

Figure 6 shows a flow diagram 600 according to an embodiment of the invention.

The constraint that the PER is below a certain threshold and that the data rate is above a certain threshold may be seen as QoS (quality of service) constraint.

In 601, a set of MCSs is selected based on the QoS constraint and the estimated receive SNR and/or noise power. This is for example done by a rough estimation of the number of spatial streams and the transmission mode using a lookup table.

In 602, for each MCS in the set of MCSs, the PER is approximated, for example based on EXIT analysis as described above The expected throughput is then computed using this PER approximation.

In 603, the MCS providing the largest throughput is selected. Each MCS has for example an index and the index of the selected MCS is transmitted to the transmitter 101 via a feedback channel.

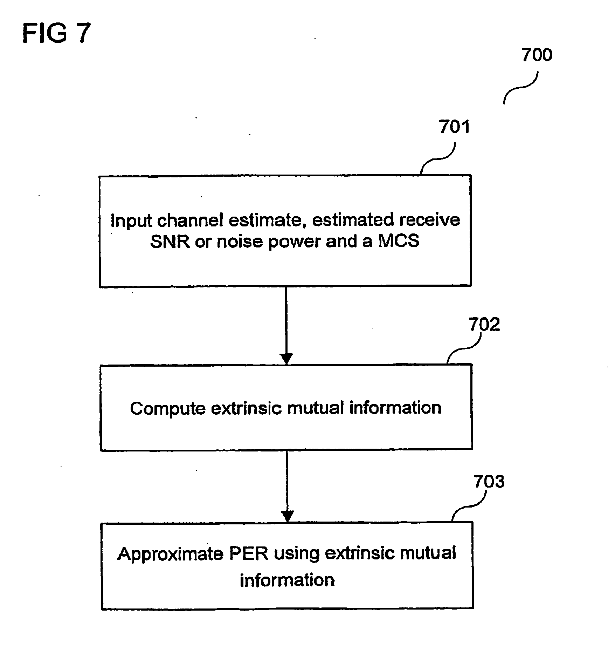

The determination of the PER for a MCS in 602 is based on a pre-generated mapping of MCS (transmission parameter setting) to PER. An example for this PER prediction method is described in the following with reference to figure 7.

Figure 7 shows a flow diagram 700 according to an embodiment of the invention.

In 701, the inputs of the PER prediction method are provided. These are the channel estimate $\hat{\underline{H}}$, the channel estimate error $\sigma_e^2$, the estimated noise power $N_0$ and a MCS (transmission parameter setting) for which the expected PER should be determined.

The output of the receiving circuits 106 is modeled as multiple virtual AWGN channels with SNR $\gamma$ given by (13) (in case of SVD) or (23) (in case of MMSE).

In 702, the extrinsic mutual information of the output for each virtual channel is determined according to (25).

In 703, the extrinsic mutual information $c_a$ (including the extrinsic mutual information of all virtual channels) is used to approximate the PER according to (29) where CBER is given by (30). The function $f_{CBER}$ depends on the code that is used. It is pre-generated by simulation followed by curve fitting. To describe the function $f_{CBER}$ approximately with reasonable complexity, the dimension of $c_a$ may be reduced. Reduction in dimensions is for example done by using a uniform quantizer.

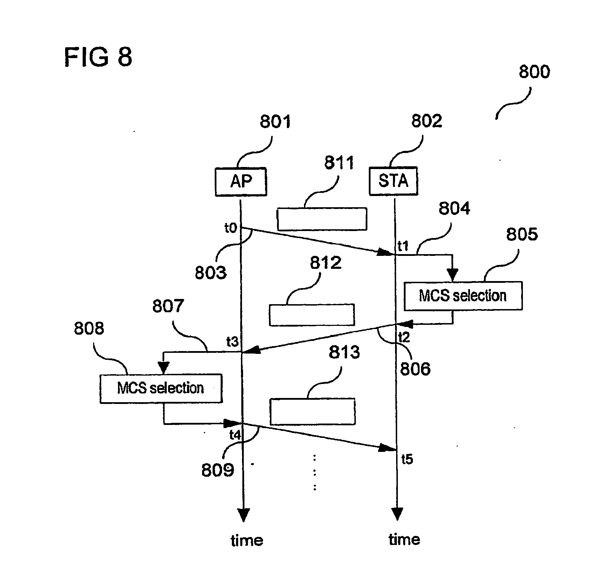

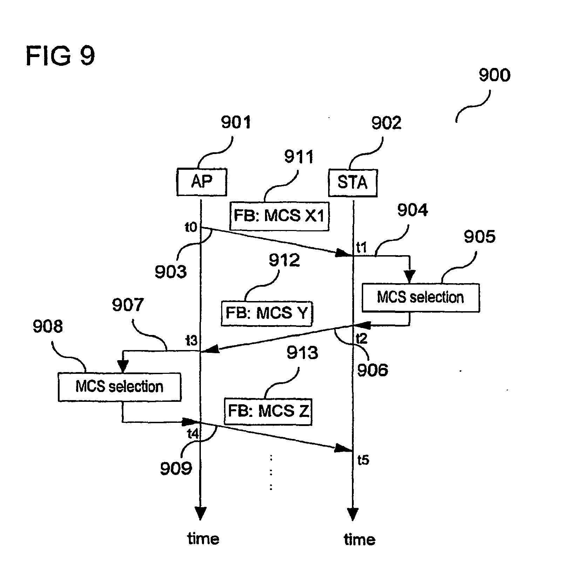

In the following, two examples of a link adaptation carried out by two communication devices according to an embodiment of the invention are described with reference to figure 8 and figure 9.

In the example described with reference to figure 8, the link adaptation is transmitter-based. This means that the transmitter of data selects the MCS (transmission parameter setting) for the data transmission himself. No MCS feedback from the receiver to the transmitter is necessary in this case.

Figure 8 shows a flow diagram 800 according to an embodiment of the invention.

A first communication device 801, e.g. an access point (AP), and a second communication device 802, e.g. a mobile station (STA), participate in the flow.

The first communication device 801 and the second communication device 802 have a communication connection via a communication channel that is reciprocal, e.g. according to TDD (time division duplex) mode. This means that there is a downlink channel from the first communication device 801 to the second communication device 802 and an uplink channel from the second communication device 802 to the first communication device 801. The reciprocal property of the communication channel is used for this link adaptation method. The downlink channel is used to select a MCS for the uplink channel and vice versa.

In 803 (time t0), the first communication device 801 transmits a first data frame 811 according to a first MCS (MCS A) that it has for example initially selected.

In 805 (time t1), the second communication device 802 receives the first data frame 811 and (now acting as transmitter) selects, in 805, a second MCS (MCS B) for data transmission to the first communication device 801 using the information it has from receiving the first data frame 811 (e.g. channel state information about the downlink channel). This means that the second communication device 802 selects an MCS for the uplink channel based on the downlink channel.

In 806 (time t2) the second communication device 802 transmits a second data frame 812 according to the second MCS.

In 807 (time t3), the first communication device 801 receives the second data frame 812 and, in 808, (now acting as transmitter) selects a third MCS (MCS C) for the downlink transmission using the information it has from receiving the second data frame 812.

In 809, the first communication device 801 transmits a third data frame 813 according to the third MCS which is received by the second communication device 802 (time t5) and so on.

In the example described with reference to figure 9, the link adaptation is transmitter-based. This means that the transmitter of data uses the MCS for the data transmission that it has been told by the receiver. For this, the communication channel is not required to be reciprocal, as the MCS selection is done in the receiver.

Figure 9 shows a flow diagram 900 according to an embodiment of the invention.

Similarly to figure 8, a first communication device 901, e.g. an access point (AP), and a second communication device 902, e.g. a mobile station (STA), participate in the flow.

The first communication device 901 and the second communication device 902 have a communication connection via a communication channel that is, in contrast to the scenario according to figure 8, not required to be reciprocal.

In 903 (time t0), the first communication device 901 transmits a first data frame 911 according to a first MCS (MCS X) to the second communication device 901. The first data frame 911 includes the specification of a second MCS (MCS X1) recommended for the second communication device 902 feedback (FB) rate of MCS X1. This specification can be considered as initial feedback.

In 904 (time t1), the second communication device 902 receives the first data frame 911 and, in 905, selects a third MCS (MCS Y) to be used by the first communication device 901 for the next data transmission from the first communication device 901 to the second communication device 902 as MCS. This means that the receiver (in this case the second communication device 902) instructs the transmitter (in this case the first communication device 901) according to which MCS it should (or it is recommended to) transmit data.

In 906 (time t2), the second communication device 905 transmits a second data frame 912 according to the second MCS X1 that was recommended by the first communication device 901 in the first data frame 911. The second data frame 912 includes a specification of the third MCS, e.g. in a feedback (FB) field of the second data frame 912.

In 907 (time t3), the first communication device the second data frame 912 and, in 908, selects a fourth MCS (MCS Z) that it recommends for the next data transmission from the second communication device 902 to the first communication device 901. In 909 (time t4), a third data frame 913 is transmitted from the first communication device 901 to the second communication device 902 according to the third MCS that includes a specification of the fourth MCS and is received by the second communication device 902 (time t5) and so on.

According to one embodiment of the invention, the MCS selection algorithm is used for solving the following optimization problem:

$$\max \ r_{MCS}(1 - PER_{MCS})$$
$$\text{s.t. } Pr(PER_{MCS} > PER_{t\,arg\,et}) \leq 0.05 \qquad\qquad (31)$$
$$r_{MCS} \in MCSset,$$

where the maximization is done over all MCSs form a given (e.g. pre-selected) set MCSset of MCSs and $r_{MCS}$ is the data rate and $PER_{MCS}$ is the packet error rate of the respective MCS.

For example, the outage probability $Pr (PER_{MCS} > PER_{target})$ is set to be less than 5%.

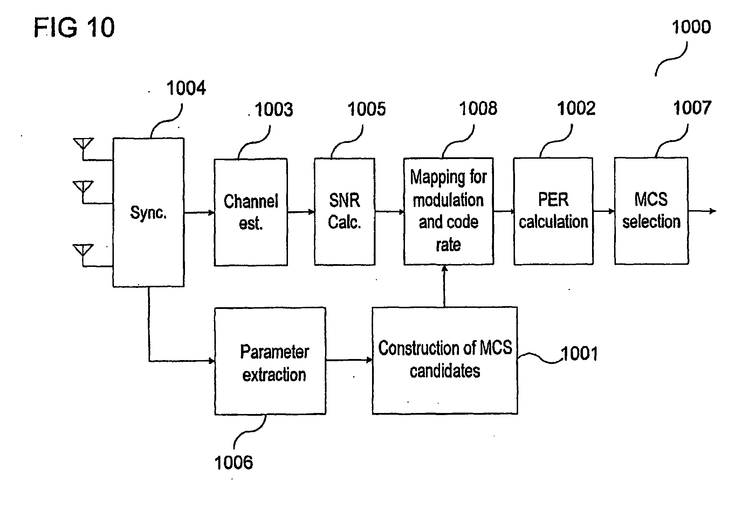

In the following, an example for an MCS selection algorithm carried out by the communication devices shown in figure 8 and 9, including the PER prediction is explained with reference to figure 10.

Figure 10 shows a data flow diagram 1000 illustrating the MCS selection according to an embodiment of the invention.

In this example, the MCS selection algorithm consists of three parts: the construction of an MCS set, the MCS search algorithm, and the MCS switching algorithm.

In 1001, the common available MCS set for the two communication devices 801, 901, 802, 902 is constructed (e.g. in the form of a MCS table). For this, system parameters may be taken into account that are extracted in 1006. This set can be quite huge as it may contain MCSs with different numbers of spatial streams. To reduce the size of the MCS search, the search is in one embodiment started from the (sub-)set of MCSs according to which the same number of spatial stream is used as according to the MCS which was used for the previous data transmission, e.g. which was used for the transmission of the last received data packet. For those MCSs with duplicate rate, the MCS set implemented may be simplified by choosing the one with the best PER performance among all MCSs with the same rate.

If there are MCSs with the same data rate (theoretical, i.e. not taking into account packet errors), the MCS set implemented may be simplified by choosing the MCS with the best PER performance among all MCSs with the same data rate.

To search the optimum MCS in the MCS set, several different approaches can be implemented. For example, an exhaustive search maybe carried out if the MCS set is small. Following the direction of search in the MCS set, every MCS is tested with a PER prediction algorithm, for example the one described with reference to figure 7, in 1002. The search is for example stopped when a suitable choice for the MCS is found and the MCS is selected for data transmission in 1007.

One simplification is to arrange the MCSs in a table such that their data rates are in descending order. The search is for example started from the middle entry of the table or at the MCS that has been selected for the previous data transmission.

The MCS search may be limited to the MCSs with the same spatial stream number for complexity reduction. In order to further increase the throughput performance, the chosen MCS might be switched to another MCS according to which a different stream number should be used. In this case, first, throughput performance curves are generated for all the MCSs with the same spatial stream number. Based on these curves, switching is implemented by a look-up table. A MCS of a lower number of spatial streams might be able to replace the chosen MCS to increase the throughput. On the other hand, a MCS of the lower numbers of streams may be chosen for improving robustness while maintaining the same throughput. With switching, the size of the MCS search is smaller and the complexity is reduced because there is no longer required to estimate the PER performance of multiple spatial streams.

The prediction of the PER depends on the channel coherence time and estimation reliability. The PER is a function given by

$$PER = f(MCS, N_0, \underline{H}, L),\qquad(32)$$

where $N_0$ is the noise variance, $\underline{H}$ is the channel matrix giving the current transmission characteristics of the communication channel and L is the packet length.

The PER is for example predicted for the MCS scheme described above and for example used by the communication devices 801, 901, 802, 902 as follows. For MMSE detection, in 1005, the SNR $\gamma_i$ is determined based on the channel estimation that is carried out, in 1003, after synchronization in 1004, e.g. by a MIMO module, one for each spatial stream and subcarrier.

The channel estimation error is included to provide a more accurate estimate of the PER. An offset may be added in the SNR calculation. This offset is a function of the filter of the detector and the noise variance. To reduce the complexity of the PER prediction, these values are mapped onto the average SNR $\bar{\gamma_i}$ for each spatial stream. For even modulation where all the spatial streams use the same modulation, the SNRs of the spatial streams are first sorted among the spatial streams for each subcarrier, and then averaged in the frequency domain over all the subcarriers.

For beamforming mode, uneven modulation can be used. Here, the modulation schemes for different spatial streams may be different. In this case, sorting is not required.

For transmitter based link adaptation, safety margins are required when the number of transmit and receive antennas are different. This is to account for the using of the uplink channel for MCS selection of the downlink channel and vice versa. For example, in a system where the access point has 4 antennas and the mobile station has 3 antennas, the uplink will experience receive diversity, whilst the downlink experiences transmit diversity. Safety margins are required for the difference in diversity.

For example, for transmitter-based link adaptation and asymmetric configurations, an SNR offset may be used.

The output of the detector is modeled as multiple virtual AWGN channels with SNR given by $\bar{\gamma_i}$ (where i is the number of the virtual channel). The mapping of the post detection SNR $\bar{\gamma_i}$ to the mutual information of the detector $c_{ai}$ in 1008 can be implemented using a lookup table for different modulations based on the data collected from simulations. To reduce storage requirement, the mutual information of the detector can also be modeled by a 3$^{rd}$ order polynomial of the form

$$c_{ai} = p_3\gamma_i^3 + p_2\gamma_i^2 + p_1\gamma_i + p_0,\qquad(33)$$

where $p_j$ are predetermined coefficients. Note that $\gamma_i$ is given in dB. The polynomial coefficients $p_j$ are determined from simulations and can take on different values for different types of modulation. The values of $p_j$ can also be different for the same modulation at different SNR values. The mutual information $c_{ai}$ thus generated from the $\bar{\gamma_i}$ with the given modulation scheme are then averaged over the spatial streams to given a mean value $\overline{ca}$.

The behavior of the decoder can also be modeled by a third order polynomial mapping function from the extrinsic information $\overline{ca}$ to the coded bit error rate CBER. CBER is related to the extrinsic information $\overline{ca}$ by

$$CBER = \frac{1}{2}\exp\left(3rd\ order\ polynomial\ function\ of\ \overline{ca}\right).\qquad(34)$$

This polynomial function is also obtained offline (i.e. is pre-generated) by Monte-Carlo simulations. Pre-generated look-up tables can also be used instead of the polynomial function. For each code rate and type of decoder used, there is a corresponding mapping function. The packet error rate is subsequently estimated from the CBER. For convolutional codes, the PER is approximated by

$$PER \approx 1 - (1 - CBER)^{L / v} \qquad (35)$$

For block code like LDPC, the PER is approximated by

$$PER \approx 1 - (1 - PER_B)^{L / n} \qquad (36)$$

where $PER_B$ is the PER of the block code used, and n is the length of the codeword. $PER_B$ is related to ca by a 3rd order polynomial function.

**Claims**

1. A method for selecting transmission parameters for a data transmission comprising:

determining (201), for each of a plurality of transmission parameter settings, a data throughput that is expected when the transmission parameter setting is used for data transmission, wherein the data throughput is determined using a pre-generated mapping of transmission parameter settings to data throughput and wherein data throughput is determined from an error rate that is expected when the transmission parameter setting is used for data transmission; and
selecting (202) a transmission parameter setting based on the determined data throughput such that the expected data throughput is maximized subject to a target error rate constraint of the data transmission, which is obtained from a Quality of Service constraint of the data transmission,
wherein the transmission parameter setting specifies a number of spatial streams to be selected for the data transmission and the transmission parameter setting is selected based on a previously selected transmission parameter setting and a pre-determined switching table associated with the previously selected transmission parameter setting, wherein the switching table includes information about characteristics of the data transmission when a different number of spatial streams is used than according to the previously selected transmission parameter setting, and wherein the characteristics of the data transmission is the robustness of the data transmission or the expected throughput of the data transmission.

2. The method according to claim 1, wherein the error rate is determined using a pre-generated mapping of transmission parameter settings to error rates.

3. The method according to claim 1, wherein the transmission parameter setting is selected (202) subject to a target error rate constraint of the data transmission,
wherein the target error rate constraint is preferably obtained from a Quality of Service constraint of the data transmission.

4. The method according to claim 1, further comprising carrying out the data transmission using the selected transmission parameter setting, or
wherein the transmission parameter setting defines at least one of a data transmission mode, a coding rate, a constellation size, a modulation type, and a coding type.

5. The method according to claim 2, wherein the pre-generated mapping of transmission parameter settings to error rates is pre-generated based on an analysis of extrinsic information transfer in a receiver receiving data according to the respective transmission parameter settings.

6. The method according to claim 2, wherein the pre-generated mapping of transmission parameter settings to error rates is pre-generated by simulation, wherein the pre-generated mapping of transmission parameter settings to error rates is preferably pre-generated from the simulation results by curve-fitting, wherein preferably different curve fitting functions are used for different signal-to-noise ratio regions for the same transmission parameter setting.

7. The method according to claim 1, wherein the transmission parameter setting is selected (202) from a set of candidate transmission parameter settings generated based on a look-up table which is generated based on at least one of a transmission parameter setting used for the transmission of a received data packet, the signal-to-noise ratio of a communication channel via which a data packet has been received, the number of transmit antennas and receive antennas used for the data transmission, and the capability of the transmitter and the receiver involved in the data transmission.

8. The method according to claim 1, wherein the pre-determined mapping function uses a post-detection signal-to-noise ratio as input,
wherein preferably a plurality of spatial streams are used for the data transmission and the determination of the post-detection signal-to-noise ratio comprises at least one of grouping, sorting or averaging the signal-to-noise ratios of the spatial streams.

9. The method according to claim 8, wherein preferably a plurality of transmit antennas and a plurality of receive antennas are used for the data transmission and wherein, if the number of transmit antennas is different from the number of receive antennas, a signal-to-noise ratio offset is used for determining the post-detection signal-to-noise ratio.

10. A data transmission controller (300) comprising a determining circuit (301) configured to determine, for each of a plurality of transmission parameter settings, a data throughput that is expected when the transmission parameter setting is used for a data transmission, wherein the data throughput is determined using a pre-generated mapping of transmission parameter settings to data throughputs and wherein data throughput is determined from an error rate that is expected when the transmission parameter setting is used for data transmission; and
a selecting circuit (302) configured to select a transmission parameter setting based on the determined data throughput such that the expected data throughput is maximized subject to a target error rate constraint of the data transmission, which is obtained from a Quality of Service constraint of the data transmission, wherein the transmission parameter setting specifies a number of spatial streams to be selected for the data transmission and the transmission parameter setting is selected based on a previously selected transmission parameter setting and a pre-determined switching table associated with the previously selected transmission parameter setting, wherein the switching table includes information about characteristics of the data transmission when a different number of spatial streams is used than according to the previously selected transmission parameter setting, and wherein the characteristics of the data transmission is the robustness of the data transmission or the expected throughput of the data transmission.

11. A computer program product, which, when executed by a computer, makes the computer perform a method for selecting transmission parameters for a data transmission comprising determining (201), for each of a plurality of transmission parameter settings, a data throughput that is expected when the transmission parameter setting is used for data transmission, wherein the data throughput is determined using a pre-generated mapping of transmission parameter settings to data throughputs and wherein data throughput is determined from an error rate that is expected when the transmission parameter setting is used for data transmission; and selecting (202) a transmission parameter setting based on the determined data throughput such that the expected data throughput is maximized subject to a target error rate constraint of the data transmission, which is obtained from a Quality of Service constraint of the data transmission, wherein the transmission parameter setting specifies a number of spatial streams to be selected for the data transmission and the transmission parameter setting is selected based on a previously selected transmission parameter setting and a pre-determined switching table associated with the previously selected transmission parameter setting, wherein the switching table includes information about characteristics of the data transmission when a different number of spatial streams is used than according to the previously selected transmission parameter setting, and wherein the characteristics of the data transmission is the robustness of the data transmission or the expected throughput of the data transmission.

**Patentansprüche**

1. Verfahren zum Auswählen von Übertragungsparametern für eine Datenübertragung aufweisend:

Ermitteln (201), für jede einer Mehrzahl von Übertragungsparametereinstellungen, eines Datendurchsatzes, der erwartet wird, wenn die Übertragungsparametereinstellung für eine Datenübertragung verwendet wird, wobei der Datendurchsatz ermittelt wird unter Verwendung einer vorgenerierten Abbildung von Übertragungsparametereinstellungen auf Datendurchsatz und wobei der Datendurchsatz aus einer Fehlerrate ermittelt wird, die erwartet wird, wenn die Übertragungsparametereinstellung für die Datenübertragung verwendet wird; und Auswählen (202) einer Übertragungsparametereinstellung basierend auf dem ermittelten Datendurchsatz, so dass der erwartete Datendurchsatz maximiert wird in Abhängigkeit einer Zielfehlerratenbedingung der Datenübertragung, welche aus einer Dienstqualitätsbedingung der Datenübertragung erhalten wird, wobei die Übertragungsparametereinstellung eine Anzahl von für die Datenübertragung auszuwählenden räumlichen Strömen spezifiziert und die Übertragungsparametereinstellung basierend auf einer zuvor ausgewählten Übertragungsparametereinstellung und einer vorgegebenen Umschalttabelle, die zu der zuvor ausgewählten Übertragungsparametereinstellung gehört, ausgewählt wird, wobei die Umschalttabelle Information über Eigenschaften der Datenübertragung enthält, wenn eine andere Anzahl von räumlichen Strömen verwendet wird als gemäß der zuvor ausgewählten Parametereinstellung und wobei die Eigenschaften der Datenübertragung die Robustheit der Datenübertragung oder der erwartete Durchsatz der Datenübertragung sind.

2. Verfahren gemäß Anspruch 1, wobei die Fehlerrate ermittelt wird unter Verwendung einer vorgenerierten Abbildung von Parametereinstellungen auf Fehlerraten.

3. Verfahren gemäß Anspruch 1, wobei die Übertragungsparametereinstellung ausgewählt wird (202) in Abhängigkeit einer Zielfehlerratenbedingung der Datenübertragung, wobei die Zielfehlerratenbedingung vorzugsweise aus einer Dienstqualitätsbedingung der Datenübertragung erhalten wird.

4. Verfahren gemäß Anspruch 1, ferner aufweisend Durchführen der Datenübertragung unter Verwendung der ausgewählten Übertragungsparametereinstellung, oder wobei die Übertragungsparametereinstellung mindestens eines aus einem Datenübertragungsmodus, einer Codierungsrate, einer Konstellationsgröße, eines Modulationstyps und eines Codierungstyps definiert.

5. Verfahren gemäß Anspruch 2, wobei die vorgenerierte Abbildung von Übertragungsparametereinstellungen auf Fehlerraten vorgeneriert ist basierend auf einer Analyse eines extrinsischen Informationstransfers in einem Empfänger, der Daten gemäß den jeweiligen Übertragungsparametereinstellungen empfängt.

6. Verfahren gemäß Anspruch 2, wobei die vorgenerierte Abbildung von Übertragungsparametereinstellungen auf Fehlerraten mittels Simulation vorgeneriert ist, wobei die vorgenerierte Abbildung von Übertragungsparametereinstellungen auf Fehlerraten vorzugsweise aus den Simulationsergebnissen mittels Kurvenanpassung vorgeneriert ist, wobei vorzugsweise unterschiedliche Kurvenanpassungsfunktionen für unterschiedliche Signal-zu-Rausch-Verhältnis-Bereiche für dieselbe Übertragungsparametereinstellung verwendet werden.

7. Verfahren gemäß Anspruch 1, wobei die Übertragungsparametereinstellung ausgewählt wird (202) aus einer Menge von Kandidatenübertragungsparametereinstellungen, erzeugt basierend auf einer Nachschlagetabelle, die basierend auf mindestens einem aus einer Übertragungsparametereinstellung, die für die Übertragung eines empfangenen Datenpakets verwendet wird, dem Signal-zu-Rausch-Verhältnis eines Kommunikationskanals, über den ein Datenpaket empfangen worden ist, der Anzahl von für die Datenübertragung verwendeten Sendeantennen und Empfangsantennen und der Leistungsfähigkeit des Senders und des Empfängers, die an der Datenübertragung beteiligt sind, erzeugt wird.

8. Verfahren gemäß Anspruch 1, wobei die vorgenerierte Abbildungsfunktion ein Post-Detektion-Signal-zu-Rausch-Verhältnis als Eingabe verwendet, wobei vorzugsweise eine Mehrzahl von räumlichen Strömen für die Datenübertragung verwendet wird und die Ermittlung des Post-Detektion-Signal-zu-Rausch-Verhältnisses mindestens eines aus Gruppieren, Sortieren und Mitteln der Signal-zu-Rausch-Verhältnisse der räumlichen Ströme aufweist.

9. Verfahren gemäß Anspruch 8, wobei vorzugsweise eine Mehrzahl von Sendeantennen und eine Mehrzahl von Empfangsantennen für die Datenübertragung verwendet werden und wobei, falls die Anzahl von Sendeantennen von der Anzahl von Empfangsantennen unterschiedlich ist, ein Signal-zu-Rausch-Verhältnis-Offset zum Ermitteln des Post-Detektion-Signal-zu-Rausch-Verhältnisses verwendet wird.

10. Datenübertragungssteuereinrichtung (300) aufweisend:

einen Ermittlungsschaltkreis (301), der eingerichtet ist, für jede einer Mehrzahl von Übertragungsparametereinstellungen, einen Datendurchsatz zu ermitteln, der erwartet wird, wenn die Übertragungsparametereinstellung für eine Datenübertragung verwendet wird, wobei der Datendurchsatz ermittelt wird unter Verwendung einer vorgenerierten Abbildung von Übertragungsparametereinstellungen auf Datendurchsätze und wobei der Datendurchsatz aus einer Fehlerrate ermittelt wird, die erwartet wird, wenn die Übertragungsparametereinstellung für die Datenübertragung verwendet wird; und

einen Auswählschaltkreis (302), der eingerichtet ist, eine Übertragungsparametereinstellung basierend auf dem ermittelten Datendurchsatz auszuwählen, so dass der erwartete Datendurchsatz maximiert wird in Abhängigkeit einer Zielfehlerratenbedingung der Datenübertragung, welche aus einer Dienstqualitätsbedingung der Datenübertragung erhalten wird, wobei die Übertragungsparametereinstellung eine Anzahl von für die Datenübertragung auszuwählenden räumlichen Strömen spezifiziert und die Übertragungsparametereinstellung basierend auf einer zuvor ausgewählten Übertragungsparametereinstellung und einer vorgegebenen Umschalttabelle, die zu der zuvor ausgewählten Übertragungsparametereinstellung gehört, ausgewählt wird, wobei die Umschalttabelle Information über Eigenschaften der Datenübertragung enthält, wenn eine andere Anzahl von räumlichen Strömen verwendet wird als gemäß der zuvor ausgewählten Parametereinstellung und wobei die Eigenschaften der Datenübertragung die Robustheit der Datenübertragung oder der erwartete Durchsatz der Datenübertragung sind.

11. Computerprogrammprodukt, das, wenn es von einem Computer ausgeführt wird, den Computer zu veranlassen, ein Verfahren zum Auswählen von Übertragungsparametern für eine Datenübertragung auszuführen, welches Verfahren aufweit Ermitteln (201), für jede einer Mehrzahl von Übertragungsparametereinstellungen, eines Datendurchsatzes, der erwartet wird, wenn die Übertragungsparametereinstellung für eine Datenübertragung verwendet wird, wobei der Datendurchsatz ermittelt wird unter Verwendung einer vorgenerierten Abbildung von Übertragungsparametereinstellungen auf Datendurchsätze und wobei der Datendurchsatz aus einer Fehlerrate ermittelt wird, die erwartet wird, wenn die Übertragungsparametereinstellung für die Datenübertragung verwendet wird; und Auswählen (202) einer Übertragungsparametereinstellung basierend auf dem ermittelten Datendurchsatz, so dass der erwartete Datendurchsatz maximiert wird in Abhängigkeit einer Zielfehlerratenbedingung der Datenübertragung, welche aus einer Dienstqualitätsbedingung der Datenübertragung erhalten wird, wobei die Übertragungsparametereinstellung eine Anzahl von für die Datenübertragung auszuwählenden räumlichen Strömen spezifiziert und die Übertragungsparametereinstellung basierend auf einer zuvor ausgewählten Übertragungsparametereinstellung und einer vorgegebenen Umschalttabelle, die zu der zuvor ausgewählten Übertragungsparametereinstellung gehört, ausgewählt wird, wobei die Umschalttabelle Information über Eigenschaften der Datenübertragung enthält, wenn eine andere Anzahl von räumlichen Strömen verwendet wird als gemäß der zuvor ausgewählten Parametereinstellung und wobei die Eigenschaften der Datenübertragung die Robustheit der Datenübertragung oder der erwartete Durchsatz der Datenübertragung sind.

## Revendications

1. Procédé destiné à sélectionner des paramètres de transmission pour une transmission de données, comprenant :

la détermination (201), pour chacune d'une pluralité de configurations de paramètres de transmission, d'un débit de données qui est attendu lorsque la configuration de paramètres de transmission est utilisée pour une transmission de données, dans lequel le débit de données est déterminé au moyen d'une mise en correspondance préalablement générée des configurations de paramètres de transmission avec le débit de données, et dans lequel le débit de données est déterminé à partir d'un taux d'erreurs qui est attendu lorsque la configuration de paramètres de transmission est utilisée pour la transmission de données ; et la sélection (202) d'une configuration de paramètres de transmission sur la base du débit de données déterminé, de sorte que le débit de données attendu est maximisé sous réserve d'une contrainte de taux d'erreurs cible de la transmission de données, laquelle est obtenue à partir d'une contrainte de qualité de service de la transmission de données, dans lequel la configuration de paramètres de transmission spécifie un nombre de flux spatiaux à sélectionner pour la transmission de données, et la configuration de paramètres de transmission est sélectionnée sur la base d'une configuration de paramètres de transmission préalablement sélectionnée et d'une table de commutation prédéterminée associée à la configuration de paramètres de transmission préalablement sélectionnée, dans lequel la table de commutation comprend des informations sur les caractéristiques de la transmission de données lorsqu'un nombre différent de flux spatiaux est utilisé plutôt que sur la base de la configuration de paramètres de transmission préalablement sélectionnée, et dans lequel les caractéristiques de la transmission de données représentent la robustesse de la transmission de données ou le débit attendu de la transmission de données.

2. Procédé selon la revendication 1, dans lequel le taux d'erreurs est déterminé au moyen d'une mise en correspondance préalablement générée des configurations de paramètres de transmission avec les taux d'erreurs.

3. Procédé selon la revendication 1, dans lequel la configuration de paramètres de transmission est sélectionnée (202) sous réserve d'une contrainte de taux d'erreurs cible de la transmission de données,
dans lequel la contrainte de taux d'erreurs cible est de préférence obtenue à partir d'une contrainte de qualité de service de la transmission de données.

4. Procédé selon la revendication 1, comprenant en outre la mise en oeuvre de la transmission de données en utilisant la configuration de paramètres de transmission sélectionnée, ou
dans lequel la configuration de paramètres de transmission définit au moins l'un parmi un mode de transmission de données, un taux de codage, une taille de constellation, un type de modulation et un type de codage.

5. Procédé selon la revendication 2, dans lequel la mise en correspondance préalablement générée des configurations de paramètres de transmission avec les taux d'erreurs est préalablement générée sur la base d'une analyse de transfert d'informations extrinsèques dans un récepteur recevant des données selon les configurations de paramètres de transmission respectives.

6. Procédé selon la revendication 2, dans lequel la mise en correspondance pré-générée des configurations de paramètres de transmission avec les taux d'erreurs est préalablement générée par le biais d'une simulation, dans lequel la mise en correspondance préalablement générée des configurations de paramètres de transmission avec les taux d'erreurs est de préférence préalablement générée à partir des résultats de simulation par le biais d'un ajustement de courbe, dans lequel, de préférence, différentes fonctions d'ajustement de courbe sont utilisées pour différentes zones de rapport signal sur bruit, pour la même configuration de paramètres de transmission.

7. Procédé selon la revendication 1, dans lequel la configuration de paramètres de transmission est sélectionnée (202) à partir d'un ensemble de configurations de paramètres de transmission candidates généré sur la base d'une table de consultation qui est générée sur la base d'au moins l'un des éléments parmi une configuration de paramètres de transmission utilisée pour la transmission d'un paquet de données reçu, le rapport signal sur bruit d'un canal de communication par l'intermédiaire duquel un paquet de données a été reçu, le nombre d'antennes de transmission et d'antennes de réception utilisées pour la transmission de données, et la capacité de l'émetteur et du récepteur impliqués dans la transmission de données.

8. Procédé selon la revendication 1, dans lequel la fonction de mise en correspondance prédéterminée utilise un rapport signal sur bruit après détection en tant qu'entrée,
dans lequel, de préférence, une pluralité de flux spatiaux sont utilisés pour la transmission de données, et la détermination du rapport signal sur bruit après détection comprend au moins l'une des étapes de regroupement, de tri ou de calcul de moyenne des rapports signal sur bruit des flux spatiaux.

9. Procédé selon la revendication 8, dans lequel, de préférence, une pluralité d'antennes de transmission et une pluralité d'antennes de réception sont utilisées pour la transmission de données, et dans lequel, si le nombre d'antennes de transmission est différent du nombre d'antennes de réception, un décalage de rapport signal sur bruit est utilisé en vue de déterminer le rapport signal sur bruit après détection.

10. Dispositif de commande de transmission de données (300) comprenant :

un circuit de détermination (301) configuré pour déterminer, pour chacune d'une pluralité de configurations de paramètres de transmission, un débit de données qui est attendu lorsque la configuration de paramètres de transmission est utilisée pour une transmission de données,
dans lequel le débit de données est déterminé au moyen d'une mise en correspondance préalablement générée des configurations de paramètres de transmission avec les débits de données, et dans lequel le débit de données est déterminé à partir d'un taux d'erreurs qui est attendu lorsque la configuration de paramètres de transmission est utilisée pour la transmission de données ; et
un circuit de sélection (302) configuré pour sélectionner une configuration de paramètres de transmission sur la base du débit de données déterminé, de sorte que le débit de données attendu est maximisé sous réserve d'une contrainte de taux d'erreurs cible de la transmission de données, laquelle est obtenue à partir d'une contrainte de qualité de service de la transmission de données, dans lequel la configuration de paramètres de transmission spécifie un nombre de flux spatiaux à sélectionner pour la transmission de données, et la configuration de paramètres de transmission est sélectionnée sur la base d'une configuration de paramètres de transmission préalablement sélectionnée et d'une table de commutation prédéterminée associée à la configuration de paramètres de transmission préalablement sélectionnée, dans lequel la table de commutation comprend des informations sur les caractéristiques de la transmission de données lorsqu'un nombre différent de flux spatiaux est utilisé plutôt que sur la base de la configuration de paramètres de transmission préalablement sélectionnée, et dans lequel les caractéristiques de la transmission de données représentent la robustesse de la transmission de données ou le débit attendu de la transmission de données.

**11.** Produit-programme informatique, qui, lorsqu'il est exécuté par un ordinateur, amène l'ordinateur à mettre en oeuvre un procédé destiné à sélectionner des paramètres de transmission pour une transmission de données, comprenant :

la détermination (201), pour chacune d'une pluralité de configurations de paramètres de transmission, d'un débit de données qui est attendu lorsque la configuration de paramètres de transmission est utilisée pour une transmission de données, dans lequel le débit de données est déterminé au moyen d'une mise en correspondance préalablement générée des configurations de paramètres de transmission avec les débits de données, et dans lequel le débit de données est déterminé à partir d'un taux d'erreurs qui est attendu lorsque la configuration de paramètres de transmission est utilisée pour la transmission de données ; et
la sélection (202) d'une configuration de paramètres de transmission sur la base du débit de données déterminé, de sorte que le débit de données attendu est maximisé sous réserve d'une contrainte de taux d'erreurs cible de la transmission de données, laquelle est obtenue à partir d'une contrainte de qualité de service de la transmission de données, dans lequel la configuration de paramètres de transmission spécifie un nombre de flux spatiaux à sélectionner pour la transmission de données, et la configuration de paramètres de transmission est sélectionnée sur la base d'une configuration de paramètres de transmission préalablement sélectionnée et d'une table de commutation prédéterminée associée à la configuration de paramètres de transmission préalablement sélectionnée, dans lequel la table de commutation comprend des informations sur les caractéristiques de la transmission de données lorsqu'un nombre différent de flux spatiaux est utilisé plutôt que sur la base de la configuration de paramètres de transmission préalablement sélectionnée, et dans lequel les caractéristiques de la transmission de données représentent la robustesse de la transmission de données ou le débit attendu de la transmission de données.

EP 2 082 512 B1

## FIG 1

FIG 2

200

201

Determine a data throughput for each transmission parameter setting using a pre-generated mapping of transmission parameter settings to data throughputs

202

Select a transmission parameter setting based on the determined expected data throughputs

FIG 3

EP 2 082 512 B1

EP 2 082 512 B1

## FIG 4

401

```
┌─────────────┐
│    Input    │
│     r/y     │
│             │
└─────────────┘
```

402

```
              ┌──────────────┐
─────────────▶│ Demodulator  │────────▶
              └──────────────┘
```

403

```
┌──────────────┐
│   Decoder    │
└──────────────┘
```

## FIG 5

FIG 6

600

601

Select a set of MCSs based on the QoS constraint and receive SNR or noise power estimates using a lookup table

602

Estimate the PER for each MCS in the set to compute the corresponding data throughput

603

Select the MCS with the highest data throughput

## FIG 7

700

701

Input channel estimate, estimated receive SNR or noise power and a MCS

702

Compute extrinsic mutual information

703

Approximate PER using extrinsic mutual information

# FIG 8

## FIG 9

900

901  AP
902  STA
911  FB: MCS X1
903  t0
904  t1
905  MCS selection
912  FB: MCS Y
907  t3
908  MCS selection
913  FB: MCS Z
906  t2
909  t4
t5

time          time

FIG 10

EP 2 082 512 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1681802 A